(19) Europäisches Patentamt
European Patent Office
Office européen des brevets

(11) **EP 2 910 375 B1**

(12) **EUROPÄISCHE PATENTSCHRIFT**

(45) Veröffentlichungstag und Bekanntmachung des Hinweises auf die Patenterteilung:
**12.06.2019 Patentblatt 2019/24**

(51) Int Cl.:
*B41F 33/00* *(2006.01)* *H04N 1/60* *(2006.01)*

(21) Anmeldenummer: **15153414.6**

(22) Anmeldetag: **02.02.2015**

(54) **UMRECHNUNG SPEKTRALER CHARAKTERISIERUNGSDATEN**

CONVERSION OF SPECTRAL CHARACTERISATION DATA

CONVERSION DE DONNÉES DE CARACTÉRISATION SPECTRALES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.02.2014 DE 102014002509**

(43) Veröffentlichungstag der Anmeldung:
**26.08.2015 Patentblatt 2015/35**

(73) Patentinhaber: **Heidelberger Druckmaschinen AG 69115 Heidelberg (DE)**

(72) Erfinder: **Bestmann, Günter 24161 Altenholz (DE)**

(56) Entgegenhaltungen:
**EP-A1- 0 228 347      EP-A1- 0 649 743
EP-A2- 2 506 559      DE-A1-102006 048 556
DE-A1-102008 045 661      DE-A1-102010 007 858**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die Erfindung beschreibt ein Verfahren zur Umrechnung von spektralen Charakterisierungsdaten eines Druckprozesses an einen oder mehrere vorgegebene Farbwerte und/oder an eine oder mehrere vorgegebene Tonwerte oder Tonwertzunahmen. Das Verfahren besteht aus den folgenden Schritten:

- Andruck eines Testelements mit einer geeignet gewählten Anzahl von Farbfeldern und Messung der Farbfelder des Testelements mit einem Spektralfotometer,
- Berechnung der farbmetrischen Ist-Farbwerte und Darstellung ausgewählter Farbwerte auf einer Ausgabeeinheit, Eingabe von farbmetrischen Soll-Farbwerten und Umrechnung der spektralen Daten,
- Berechnung der densitometrischen, farbmetrischen oder spektralen Ist-Tonwerte oder Ist-Tonwertzunahmen aus einer Teilmenge der spektralen Daten und Darstellung auf einer Ausgabeeinheit, Eingabe von densitometrischen, farbmetrischen oder spektralen Soll-Tonwerten oder Soll-Tonwertzunahmen und Umrechnung der spektralen Daten, und
- Speicherung der umgerechneten spektralen Daten in einem Datenformat geeignet für die Berechnung von ICC-Farbprofilen, Prozesskalibrierungen und Prozesskontrollwerten.

Das Verfahren basiert auf der Patentanmeldung DE 10 2010 007 858A1 und kann auf andere geeigneten spektralen Daten mit anderen geeigneten Berechnungsverfahren angewendet werden.

### Zielsetzung

Color Management und digitaler Datenaustausch von Dokumenten erfordern eindeutige Beziehungen zwischen den digitalen Tonwerten und den gedruckten Farbwerten.

Die digitalen Tonwerte liegen in der Regel als Prozessfarben CMYK vor. Im Verpackungsdruck können einzelne oder mehrere Prozessfarben gegen andere produktspezifische Farben ausgetauscht sein. So kann z.B. die Prozessfarbe Magenta gegen eine rote Druckfarbe ausgetauscht werden. Die gedruckten Farbwerte hängen vom Druckprozess (Bogenoffsetdruck, Rollenoffsetdruck), vom Prozessstandard (Färbung der Volltöne, Tonwertzuwachs der Prozessfarben) und von den verwendeten Materialien (Bedruckstoff, Druckfarbe) ab. Die digitalen Tonwerte (Rasterprozente) und die zugeordneten Farbwerte (CIELAB, CIEXYZ und/oder Spektren) werden gewöhnlich mit dem Begriff Charakterisierungsdaten bezeichnet. Neben dem konventionellen 4-Farbendruck gibt es weitere Verfahren mit weniger oder mehr Druckfarben, wobei diese Druckfarben oder einige dieser Druckfarben in der Regel Sonderfarben sind. Auch hierfür lassen sich entsprechende Charakterisierungsdaten gewinnen.

Aus den Charakterisierungsdaten werden Farbprofile zur Separation von Bildern und Grafiken sowie Richtwerte zur Prozesskalibrierung und zur Prozesskontrolle gewonnen. Charakterisierungsdatensätze werden mit Hilfe von Testelementen ermittelt. Bekannt ist das Testelement nach ISO 12642-2 [2], das aus definierten Farbfeldern der Prozessfarben CMYK besteht. Neben diesem Standardtestelement kann es weitere herstellerspezifische Testelemente und Weiterentwicklungen der ISO 12642-2 für allgemeine Anwendung mit noch feinerer Abtastung des Farbraums geben.

## Beispielhafte Testelemente (Visual und Random) nach ISO 12642-2:2006 (1617 Farbfelder)

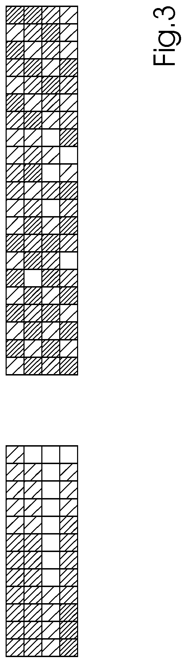

Standardisierte Charakterisierungsdatensätze für definierte Druckbedingungen wurden für in Amerika und Deutschland übliche Prozessstandards ermittelt. Daneben gibt es noch individuelle Charakterisierungsdatensätze verschiedener Organisationen, Druckereien und Verlage. Alle diese Datensätze zeichnen sich dadurch aus das keine Spektren zu den einzelnen Werten vorliegen. In der Patentanmeldung DE 10 2010 007 858A1 wird ein Verfahren zur Berechnung von Charakterisierungsdaten aus einem optimierten Testelement beschrieben, das mit einer sehr geringen Anzahl von Farbfeldern auskommt. Figur 3 zeigt ein beispielhaftes optimiertes Testelement nach der Patentanmeldung DE 10 2010 007 858A1 (132 Farbfeldern). Aus diesem Testelement lassen sich mit Hilfe der modifizierten und segmentierten spektralen Neugebauer-Gleichungen standardisierte Charakterisierungsdatensätze berechnen. Diese Datensätze zeichnen sich dadurch aus, dass Spektren zu den einzelnen Farbwerten vorliegen und die Spektren von beliebigen Tonwertkombinationen berechnet werden können. Für Druckverfahren mit weniger oder mehr als vier Druckfarben lassen sich entsprechende optimierte Testelemente generieren, insbesondere auch optimierte Testelemente mit geringer Anzahl von Farbfeldern. Druckprozesse zeigen bezüglich der Farbwerte und der Tonwertzunahmen Abweichungen gegenüber dem angestrebten Prozessstandard. Diese Abweichungen spiegeln sich in den Charakterisierungsdaten wieder. Möchte man Charakterisierungsdaten generieren die den Prozessstandard exakt beschreiben, sind Anpassungen der Daten erforderlich. Diese Anpassungen sind mit Programmen wie der Prinect Color Toolbox der Heidelberger Druckmaschinen AG möglich. Da diese Verfahren auf farbmetrischen Daten aufsetzen sind nach einer entsprechenden Anpassung die eventuell ursprünglich vorhandenen spektralen Daten nicht mehr gültig und müssen verworfen werden.

Beim in der vorliegenden Erfindung beschriebenen Verfahren zur Anpassung von spektralen Messwerten an definierte Vorgaben bleiben die spektralen Daten erhalten.

**Grundlagen**

*Grundlagen der Farbmetrik*

Die Farbempfindung $C_i$ ist eine Funktion der spektralen Reflektion $r(\lambda)$ eines Objekts, der spektralen Verteilung der Beleuchtungsquelle $I(\lambda)$ und der spektralen Empfindlichkeiten der Zapfen des Auges $s_i(\lambda)$.

$$C_i = \int_{\lambda\min}^{\lambda\max} l(\lambda) r(\lambda) s_i(\lambda) d\lambda \qquad\qquad i = 1, 2, 3 \qquad\qquad (1)$$

Mit den standardisierten Spektralwertkurven des Normbeobachters $s_i(\lambda) = x(\lambda), y(\lambda), z(\lambda)$ und der Beleuchtungsquelle $I(\lambda) = I_{D50}(\lambda)$ ergeben sich die Farbwerte $C_i = X, Y, Z$.

$$X = \int_{\lambda\min}^{\lambda\max} l_{D50}(\lambda) r(\lambda) x(\lambda) d\lambda \qquad\qquad (2a)$$

$$Y = \int_{\lambda\min}^{\lambda\max} l_{D50}(\lambda) r(\lambda) y(\lambda) d\lambda \qquad\qquad (2b)$$

$$Z = \int_{\lambda\min}^{\lambda\max} l_{D50}(\lambda) r(\lambda) z(\lambda) d\lambda \qquad\qquad (2c)$$

Da die spektralen Werte $r(\lambda)$ üblicherweise an diskreten Werten von $l$ erfasst werden, wird eine Summation über einen definierten Wertebereich durchgeführt.

$$X = \sum_{\lambda\min}^{\lambda\max} l_{iD50} r_i x_i \qquad\qquad (3a)$$

$$Y = \sum_{\lambda\min}^{\lambda\max} l_{iD50} r_i y_i \qquad\qquad (3b)$$

$$Z = \sum_{\lambda\min}^{\lambda\max} l_{iD50} r_i z_i \qquad\qquad (3c)$$

Der Wertebereich des Spektrums für diesen Anwendungsfall liegt üblicherweise im sichtbaren Bereich von etwa 380 nm bis 730 nm mit einer Auflösung von 10 nm. Die spektralen Werte der Beleuchtungsquelle $l_{iD50}(\lambda)$ und die Spektralwertkurven $x_i, y_i, z_i$ sind standardisiert und liegen tabelliert vor. Üblicherweise werden die $l_{iD50}$ und die $x_i, y_i, z_i$ zusammengefasst und normiert.

$$X = \sum_{\lambda\min}^{\lambda\max} r_i x_{iD50} \qquad\qquad (4a)$$

$$Y = \sum_{\lambda\min}^{\lambda\max} r_i y_{iD50} \qquad\qquad (4b)$$

$$Z = \sum_{\lambda\min}^{\lambda\max} r_i z_{iD50} \qquad\qquad (4c)$$

Die Farbwerte XYZ lassen sich mit den üblichen Methoden in Farbwerte LAB umrechnen. Aus den Spektren selbst lassen sich auf ähnliche Weise wie in (4a) bis (4c) Dichtewerte berechnen. Anstelle der Spektralwertkurven werden in diesem Fall die Bewertungskurven des gewünschten Dichtestandards herangezogen. Die Berechnungsmethoden sind in den ISO-Standards ISO 13655 [3] und ISO 5-3 [1] ausführlich beschrieben.

## Umrechnung spektrale Farbwerte

*Allgemeines Verfahren*

Das Verfahren beruht auf einer gezielten Modifikation der spektralen Messwerte des Papiers (Bedruckstoffs) und des bedruckten Papiers. Es ist dabei zweckmäßig nicht einzelne Spektralwerte zu verändern sondern immer Gruppen von Spektralwerten. Das hängt damit zusammen, das Veränderungen des Papierweißes und der Druckfarbe immer die Gesamtheit der Spektralwerte betreffen und nicht einzelne Spektralwerte. Die Modifikation einzelner Spektralwerte führt nicht zum Ziel.

Gegeben ist das Spektrum eines Tonwerts $r_i$. Unter Verwendung der Formeln 4a bis 4c werden die Farbwerte XYZ und daraus die abgeleiteten Farbwerte LAB berechnet. Die Farbwerte LAB werden als Ist-Farbwerte $LAB_{ist}$ auf einer Ausgabeeinheit dargestellt. Diesem Ist-Farbwert kann vom Anwender ein Soll-Farbwert $LAB_{soll}$ zugeordnet werden. Die Differenz dE zwischen den beiden Farbwerten kann gemäß [3] berechnet werden.

$$dE = \sqrt{(L_{soll} - L_{ist})^2 + (a_{soll} - a_{ist})^2 + (b_{soll} - b_{ist})^2} \qquad (5)$$

Ziel des Verfahrens ist es die Spektralwerte so zu modifizieren, das die Differenz dE minimal wird, im Idealfall zu 0.

Die Minimierung der Differenz dE ist äquivalent einer Minimierung der Differenz der Farbwerte XYZ. Wenn die Differenz der Soll-Farbwerte $XYZ_{soll}$ und der Ist-Farbwerte $XYZ_{ist}$ minimal ist, ist auch die Differenz dE minimal.

Ausgehend von den Formeln 4a bis 4c bietet es sich daher an, (a) die Spektralwertkurven $x_{iD50}$, $y_{iD50}$ und $z_{iD50}$ oder (b) die Spektralwerte $r_i$ so zu optimieren, das der Ist-Farbwert $XYZ_{ist}$ möglichst gleich dem Soll-Farbwert $XYZ_{soll}$ wird.

Es gibt in der Literatur unterschiedliche Optimierungsverfahren. Ein übliches Verfahren verwendet drei Koeffizienten $a_x$, $a_y$, $a_z$ mit denen die Spektralwerte $x_{iD50}$, $y_{iD50}$ und $z_{iD50}$ jeweils multipliziert werden.

Bei dem Verfahren (a) folgt dann:

$$X = \sum_{\lambda \min}^{\lambda \max} r_i a_x x_{iD50} \qquad (6a)$$

$$Y = \sum_{\lambda \min}^{\lambda \max} r_i a_y y_{iD50} \qquad (6b)$$

$$Z = \sum_{\lambda \min}^{\lambda \max} r_i a_z z_{iD50} \qquad (6c)$$

Bei dem Verfahren (b) wird mit den oben eingeführten Koeffizienten aus dem zu optimierenden Spektrum ein neues Spektrum berechnet:

$$r_{ineu} = \frac{(a_x x_{iD50} + a_y y_{iD50} + a_z z_{iD50})}{(x_{iD50} + y_{iD50} + z_{iD50})} * r_{ialt} \qquad (7)$$

Das Verfahren (b) wird hier verwendet, da es besser angepasste Werte liefert.

Die Koeffizienten werden ausgehend von einem geeignet gewählten Startwert solange iterativ vergrößert und verkleinert bis das gewünschte Ergebnis erreicht ist. Als Startwert kann der Wert 1 oder besser der Quotient aus den $XYZ_{soll}$ und $XYZ_{ist}$ verwendet werden.

$$a_x = X_{soll} / X_{ist} \qquad (8a)$$

$$a_y = Y_{soll} / Y_{ist} \qquad (8b)$$

$$a_z = Z_{soll} / Z_{ist} \qquad (8c)$$

Mit den gegebenen Startwerten wird ein erstes dE berechnet. Dann werden die Koeffizienten um einen kleinen Wert (z.B. um 0.001) nach oben und nach unten variiert und für jeden Wert werden neue dE bestimmt. Ist das neue minimale dE kleiner als das alte dE so wird der zugehörige Koeffizient in einem nächsten Iterationsschritt verwendet. Ist kein neuer dE-Wert kleiner als der alte dE-Wert ist der Iterationszyklus abgeschlossen. Zur weiteren Verbesserung wird jetzt mit einem kleineren Wert für die Variation der Koeffizienten gearbeitet. Zweckmäßig ist eine Halbierung der Werte (z.B. auf 0.0005 in einem zweiten Iterationszyklus).

Das Verfahren wird solange fortgesetzt bis keine Verbesserung der Ergebnisse mehr erreicht wird. Dies kann ein genügend kleines dE sein und/oder aber ein sehr kleiner Wert für die Variation der Koeffizienten.

Mit den so bestimmten Koeffizienten wird nun mit Formel 7 ein neues Spektrum berechnet. Die Umrechnung der Spektralwerte ist damit abgeschlossen.

Bei diesem Verfahren wurden drei Koeffizienten und drei Gewichtungsfunktionen verwendet. Dies hat sich als ausreichend erwiesen. Eine Erweiterung auf mehr Koeffizienten und mehr geeignete sich überlappende Gewichtungsfunktionen ist möglich.

*Umrechnung Papierweiß*

Eine Änderung des Papierweißes beeinflusst alle Farbwerte die auf diesem Papier gedruckt werden. Wird jetzt das Spektrum des Papierweißes umgerechnet, müssen alle anderen Spektren des Charakterisierungsdatensatzes ebenfalls umgerechnet werden. Die geschieht ebenfalls auf spektraler Basis.

Dazu werden die Spektren des alten Papierweißes und des neuen Papierweißes benötigt. Eine einfache und ausreichende Methode besteht in der komponentenweisen Umrechnung aller Spektralwerte aller Tonwerte des Charakterisierungsdatensatzes.

$$r_{ineu} = \frac{r_{iPapierneu}}{r_{iPapieralt}} \times r_{ialt} \qquad\qquad (9)$$

Aus den umgerechneten Spektren können dann die neuen Farbwerte XYZ und LAB sowie die Dichten berechnet werden.

*Umrechnung Primärfarben*

Die Umrechnung der Primärfarben erfolgt wie im allgemeinen Verfahren beschrieben. Eine Änderung des Volltones (100%) einer Prozessfarbe beeinflusst die (gerasterten) Halbtöne. Sind in einem Charakterisierungsdatensatz außer den für die Neugebauer-Gleichungen erforderlichen Tonwerten weitere Tonwerte der Prozessfarbe vorhanden, müssen diese Spektren ebenfalls umgerechnet werden. Sind Beispielsweise die Tonwerte 10, 20, 30, 40, 50, 60, 70, 80, 90% in einem Datensatz vorhanden muss die Änderung des Spektrums der Volltöne proportional in die Spektren der Tonwerte eingerechnet werden. Dazu werden die Spektren des alten Volltones und des neuen Volltones benötigt. Eine einfache und ausreichende Methode besteht in der gewichteten Einrechnung der spektralen Differenzen. Die Gewichtung wird über die Rasterprozente A der Halbtöne durchgeführt, die größer als ein minimaler Rasterprozentwert $A_m$ sind. Ein zweckmäßiger Wert für $A_m$ ist beispielsweise der Segmentwert aus den segmentierten spektralen Neugebauer-Gleichungen (typischerweise 40 oder 50%).

$$r_{ineuA} = r_{ialtA} \times (r_{ineu100\%} - r_{ialt100\%}) \times (1 - (100 - A)/(100 - A_m)) \qquad\qquad (10)$$

Aus den umgerechneten Spektren können dann die neuen Farbwerte XYZ und LAB sowie die Dichten berechnet werden.

*Umrechnung Sekundärfarben*

Die Umrechnung von Sekundärfarben, d.h. der Zusammendrucke von Primärfarben oder gerasteter Primärfarben, erfolgt wie im allgemeinen Verfahren beschrieben. Gegebenenfalls müssen umgebende Tonwerte analog wie oben zusätzlich korrigiert werden.

**Umrechnung spektrale Tonwerte**

Stufenkeile der Prozessfarben bestehend aus geeignet gestuften Tonwerten werden zur Prozesskalibrierung verwendet. Einzelne in Prozessstandards wie ISO 12647-2 [4] definierte Tonwerte werden zur Prozesskontrolle verwendet. Es besteht also die Notwendigkeit Charakterisierungsdaten mit definierten Tonwerten zu drucken. In aller Regel entsprechen die gedruckten Werte aber nicht den Vorgaben und müssen daher angepasst werden.

Das Verfahren zur Umrechnung ist zweistufig. In einem ersten Schritt werden die Tonwerte des Charakterisierungsdatensatzes selbst umgerechnet und dann wird in einem zweiten Schritt eine Neuberechnung der Spektren unter Verwendung der segmentierten spektralen Neugebauer-Gleichungen durchgeführt.

*Umrechnung der Tonwerte*

Aus den Spektren des Papiers, der gerasterten Prozessfarbwerte und der Volltöne der Prozessfarben werden die entsprechenden Dichtewerte gemäß [1] berechnet. Es lassen sich darüber hinaus auch farbmetrische und spektrale Dichten berechnen. Farbmetrische Dichten werden aus den XYZ-Farbwerten gemäß [3] berechnet, spektrale Dichten aus den Spektralwerten, die eine maximale Absorption zeigen. Letzteres ist insbesondere bei Sonderfarben von Vorteil.

Aus den Dichtewerten lassen sich die Tonwerte $A_D$ im Druck bestimmen:

$$A_D = \frac{10^{-D_0} - 10^{-D}}{10^{-D_0} - 10^{-D_n}} \qquad (11)$$

$D_0$ ist dabei der Dichtewert des Papiers, *Dn* der Dichtewert des Volltons und D die Dichte des gerasterten Tonwertes für den der Tonwert im Druck bestimmt werden soll. Die Tonwertzunahme erhält man nach Subtraktion des Tonwertes der Vorlage $A_V$.

$$\mathrm{TWZ} = A_D - A_V \qquad (12)$$

Die Soll-Tonwertzunamen für einen Druckprozess sind im Prozessstandard vorgegeben. Insbesondere die ISO 12647-2 [4] definiert eine Reihe von Tonwertzunahmen mit unterschiedlichen Werten im Mittelton sowie unterschiedlichen Verläufen. Aus einem Vergleich der gemessenen Ist-Tonwertzunahme und der Soll-Tonwertzunahme lassen sich Korrekturen für die Tonwerte ermitteln.

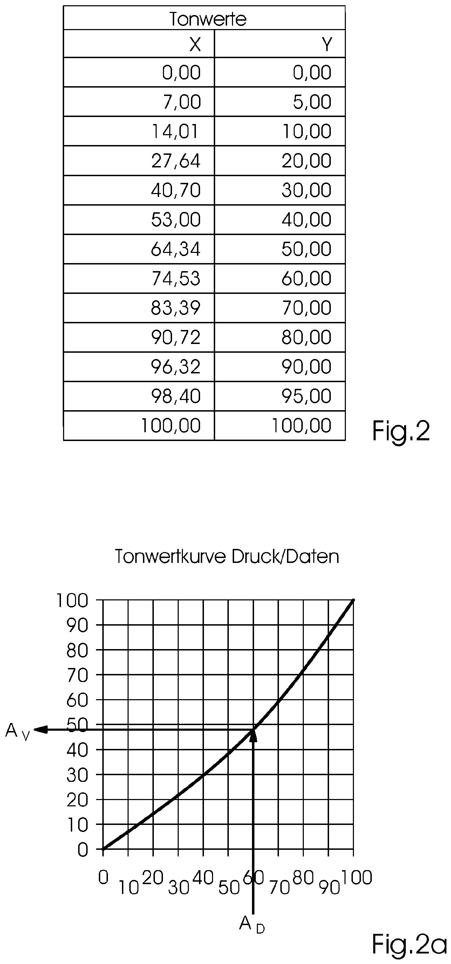

Die Tabelle in Figur 2 zeigt eine typische Tonwertkurve für einen Druckprozess mit einer Tonwertzunahme von 13% im Mittelton bei 40%. Daraus ergibt sich der Tonwert 53% im Druck als Soll-Tonwert zu einem Vorlagentonwert von 40%.

Der zugehörige Tonwertverlauf in Figur 2a ist hier invers dargestellt, da zu den gemessenen Werten des Drucks $A_D$ (X-Achse) die zugehörigen Tonwerte in der Datei $A_V$ (Y-Achse) ermitteln werden sollen

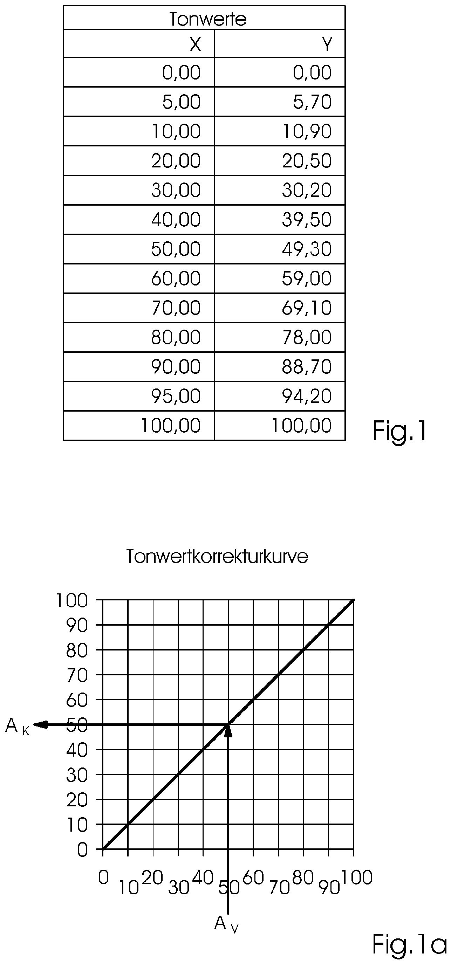

Zu allen gemessenen Tonwerten des Drucks $A_D$ können nun die Tonwerte der Vorlage $A_V$ durch eine Interpolation bestimmt werden. Wenn diese Werte gegen die tatsächlich zu erwartenden Werte bei korrektem Druckprozess aufgetragen werden, bekommt man eine Kalibrierkurve für die Tonwertzunahme. Dies ist in der folgenden Tabelle in Figur 1 dargestellt. Figur 1a zeigt den zugehörigen Tonwertverlauf.

Zu jedem Vorlagenfarbwert kann man nun einen korrigierten Wert ermitteln und mit diesem Wert den Tonwert der Charakterisierungsdaten ersetzen.

*Umrechnung der Spektren*

Nach der Umrechnung bzw. Kalibrierung der Tonwerte der Charakterisierungsdaten hat man nun eine Datei mit vom Original abweichenden Tonwerten. Diese Datei kann mit Hilfe der segmentierten spektralen Neugebauer-Gleichung umgerechnet werden auf die ursprünglichen Tonwerte. Dies kann mit dem in der Patentanmeldung DE 10 2010 007 858A1 beschriebenen Verfahren durchgeführt werden.

**Praktische Anwendung**

Charakterisierungsdaten zur Profilierung, Kalibrierung und Kontrolle von Druckprozessen werden durch Andrucke geeigneter Testelemente gewonnen. Aufgrund der Prozessspezifischen Schwankungen im Druck ist es sehr schwierig oder nicht möglich exakt an den Prozess angepasste Daten zu ermitteln. Es sind Korrekturen notwendig.

Diese Korrekturen an den gemessenen Daten führen mit den heute zur Verfügung stehenden Mitteln zu einem Verlust der Spektren. Die Spektren sind aber in vielen Fällen notwendig um die originalen Daten z.B. auf unterschiedliche Dichte-Standards hin anzupassen oder um aus einem vorhandenen Datensatz für neue Tonwerte farbmetrisch definierte Daten vorauszuberechnen.

*Einrichtung eines Druckprozesses*

Üblicherweise wird eine Testform mit verschiedenen Testelementen zur Kalibrierung und Profilierung auf einem Plattenbelichter ausgegeben und gedruckt. Aus einem Teil der Testelemente wird eine Kalibrierung berechnet und im Plattenbelichter angewendet. Die Testform wird erneut gedruckt und wenn die Tonwertzunahmen und Färbungswerte dem Standard im Rahmen seiner Toleranzen entsprechen, kann ein Testelement zur Profilierung ausgemessen werden. Es sind mindestens zwei Drucke notwendig. Mit den oben beschriebenen Methoden der Umrechnung von spektralen Daten kann der Druck zur Profilierung eingespart werden, indem die Daten zur Profilierung aus dem ersten Druck umgerechnet werden.

Aus der deutschen Patentanmeldung DE 10 2008 045 661 A1 ist zudem ein Verfahren zur Regelung der Farbdosierung in Druckmaschinen mit einem Rechner zum Vergleich von Farbmesswerten mit Farbsollwerten und zur Steuerung der Farbdosierung

in den Farbwerken der Druckmaschine bekannt. Die Erfindung zeichnet sich dadurch aus, dass die Regelung der Farbdosierung in den Farbwerken der Druckmaschine durch Zurückführung aller Einflussgrößen des Regelprozesses auf eine einheitliche Regelgröße erfolgt.

*Exakte Anpassung an einen Prozessstandard*

Das erfindungsgemäße Verfahren wird genutzt, um Charakterisierungsdaten an einen vorgegebenen Standard exakt anzupassen und gleichzeitig die spektralen Daten zu erhalten.

Die Umrechnung von vorhandenen spektralen Charakterisierungsdaten auf einen modifizierten Druckprozess ist ebenfalls möglich.

Die Verfahren sind nicht auf vierfarbige Druckprozesse beschränkt. Sie eignen sich insbesondere auch für die Anpassung von Tonwerten und Farbwerten bei Sonderfarben, Übereinaderdrucken von Sonderfarben und Multi-Color-Druckverfahren.

**Patentansprüche**

1. Verfahren zur Steuerung der Farbgebung im Druckprozess einer Druckmaschine mit einem Rechner, umfassend die folgenden Verfahrensschritte:

   - Drucken eines Testelements mit einer gewählten Anzahl von Farbmessfeldern und Messen der gedruckten Farbmessfelder des Testelements mit einem spektral messenden Farbmessgerät,
   - Berechnung der farbmetrischen Ist-Farbwerte aus den gemessenen Farbmesswerten der Farbmessfelder des Testelements sowie Darstellung ausgewählter Ist-Farbwerte auf einer Anzeigevorrichtung,
   - Eingeben von farbmetrischen Soll-Farbwerten und Berechnung angepasster spektraler Farbwerte aus den farbmetrischen Soll-Farbwerten,
   - Berechnen densitometrischer, farbmetrischer oder spektraler Ist-Tonwerte oder Ist-Tonwertzunahmen aus den berechneten, farbmetrischen Ist-Farbwerten einer Teilmenge der mit dem spektralen Farbmessgerät vermessenen Farbfelder des Testelements und Anzeige auf der Anzeigeeinrichtung,
   - Eingeben von densitometrischen, farbmetrischen oder spektralen Soll-Tonwerten oder Soll-Tonwertzunahmen und Berechnung angepasster spektraler Farbwerte durch Vergleich mit den berechneten farbmetrischen Ist-Farbwerten und
   - Speichern der angepassten spektralen Farbwerte zur Berechnung von Farbprofilen, Prozesskalibrierungen und Prozesskontrollwerten und Ansteuerung 'der Druckmaschine auf Basis der Farbprofile, Prozesskalibrierungen und Prozesskontrollwerten.

2. Verfahren nach Anspruch 1,
   **dadurch gekennzeichnet,**
   **dass** das Testelement wenigstens Farbfelder mit den Prozessfarben Cyan, Magenta, Gelb und Schwarz aufweist.

3. Verfahren nach einem der vorhergehenden Ansprüche,

**dadurch gekennzeichnet,**
**dass** das Testelement im Hinblick auf die Anzahl der Messfelder optimiert ist, dass Spektren zu den einzelnen Farbwerten vorliegen und dass Spektren beliebiger Tonwertkombinationen berechnet werden können.

4. Verfahren nach einem der vorhergehenden Ansprüche,
**dadurch gekennzeichnet,**
**dass** im Rechner gezielt spektrale Messwerte des Bedruckstoffs im unbedruckten Zustand und des bedruckten Bedruckstoffs modifiziert werden.

5. Verfahren nach Anspruch 4,
**dadurch gekennzeichnet,**
**dass** spektrale Messwerte gruppenweise modifiziert werden.

6. Verfahren nach einem der vorhergehenden Ansprüche,
**dadurch gekennzeichnet,**
**dass** die Farbwerte als LAB Farbwerte auf der Anzeigeeinrichtung angezeigt werden.

7. Verfahren nach Anspruch 5, **dadurch gekennzeichnet,**
**dass** die Differenz zwischen den eingegebenen Soll-Farbwerten und den angezeigten Ist-Farbwerten im Rechner minimiert wird und die spektralen Messwerte durch die anpassende Berechnung entsprechend modifiziert werden.

8. Verfahren nach Anspruch 5,
**dadurch gekennzeichnet,**
**dass** die Modifizierung der spektralen Messwerte iterativ durchgeführt wird bis ein Abbruchkriterium erreicht ist.

9. Verfahren nach einem der vorhergehenden Ansprüche,
**dadurch gekennzeichnet,**
**dass** das Testelement auch Farbmessfelder mit Sonderfarben enthält.

**Claims**

1. Method for controlling colours in a printing operation on a printing machine using a computer, the method comprising the following steps of

   - printing a test element with a selected number of colour measurement patches and measuring the printed colour measurement patches of the test element using a colour measuring device that takes spectral measurements,
   - calculating the colorimetric actual colour values on the basis of the measured colour values of the colour measurement patches of the test element and displaying selected actual colour values on a display device,
   - inputting colorimetric target colour values and calculating adapted spectral colour values on the basis of the colorimetric target colour values,
   - calculating densitometric, colorimetric or spectral actual tone values or actual dot gains on the basis of the calculated colorimetric actual colour values of a subset of the colour patches that have been measured in the test element by the spectral colour measurement device and displaying them on the display device,
   - inputting densitometric, colorimetric or spectral target tone values or target dot gains and calculating adapted spectral colour values by comparing with the calculated colorimetric actual colour values and
   - saving the adapted spectral colour values to calculate colour profiles, process calibrations and process control values and controlling the printing machine on the basis of the colour profiles, process calibrations and process control values.

2. Method according to claim 1,
   **characterized**
   **in that** the test element includes at least colour patches of the process colours cyan, magenta, yellow and black.

3. Method according to any one of the preceding claims,
   **characterized**
   **in that** the test element is optimized in terms of the number of the measuring patches, in that spectrums for the individual colour values are available and in that spectrums of any desired tone value combinations may be calculated.

4. Method according to any one of the preceding claims, **characterized in that** measured spectral values of the printing material in the unprinted condition and of the printed printing material are specifically modified on the computer.

5. Method according to claim 4, **characterized in that** measured spectral values are modified in groups.

6. Method according to any one of the preceding claims, **characterized in that** colour values are displayed as LAB colour values on the display device.

7. Method according to claim 5, **characterized in that** the difference between the input target colour values and the indicated actual colour values is minimized on the computer and the measured spectral values are modified in a corresponding way by the adapting calculation.

8. Method according to claim 5, **characterized in that** the modification of the measured spectral values is carried out iteratively until a termination criterion is reached.

9. Method according to any one of the preceding claims, **characterized in that** the test element also includes colour measurement patches with spot colours.

**Revendications**

1. Procédé de commande de l'encrage dans le processus d'impression d'une machine à imprimer faisant appel à un ordinateur, se composant des étapes suivantes :

   - impression d'un élément de test avec un nombre sélectionné de champs de mesure de la couleur et mesure des champs de mesure de la couleur imprimés de l'élément de test avec un appareil de mesure spectrale des couleurs,
   - calcul des valeurs de couleur colorimétriques réelles à partir des valeurs de mesure de la couleur mesurées des champs de mesure de la couleur de l'élément de test ainsi que représentation de valeurs de couleur réelles sélectionnées sur un dispositif d'affichage,
   - saisie de valeurs de couleur colorimétriques de consigne et calcul de valeurs de couleur spectrales adaptées à partir des valeurs de couleur colorimétriques de consigne,
   - calcul de valeurs tonales densitométriques, colorimétriques ou spectrales réelles ou de gains de tonalité réels à partir des valeurs de couleur colorimétriques réelles calculées d'un sous-ensemble des champs de couleur mesurés avec l'appareil de mesure spectrale des couleurs de l'élément de test et affichage sur le dispositif d'affichage,
   - saisie de valeurs tonales densitométriques, colorimétriques ou spectrales de consigne ou de gains de tonalité de consigne et calcul de valeurs de couleur spectrales adaptées par comparaison avec les valeurs de couleur colorimétriques réelles calculées et
   - enregistrement des valeurs de couleur spectrales adaptées pour le calcul de profils d'encrage, calibrages de processus et valeurs de contrôle de processus, et commande de la machine à imprimer sur la base des profils d'encrage, calibrages de processus et valeurs de contrôle de processus.

2. Procédé selon la revendication 1, **caractérisé en ce que** l'élément de test présente au moins des champs de couleurs avec les couleurs quadri cyan, magenta, jaune et noir.

**3.** Procédé selon l'une des revendications précédentes,
**caractérisé en ce**
**que** l'élément de test est optimisé en ce qui concerne le nombre de champs de mesure, qu'il existe des spectres pour les différentes valeurs de couleur et que des spectres de combinaisons de valeurs tonales quelconques peuvent être calculés.

**4.** Procédé selon l'une des revendications précédentes,
**caractérisé en ce**
**que** des valeurs de mesure spectrales du support d'impression à l'état non imprimé et du support d'impression imprimé peuvent être modifiées de manière ciblée dans l'ordinateur.

**5.** Procédé selon la revendication 4,
**caractérisé en ce**
**que** des valeurs de mesure spectrales peuvent être modifiées par groupe.

**6.** Procédé selon l'une des revendications précédentes,
**caractérisé en ce**
**que** les valeurs de couleur sont affichées comme valeurs de couleur LAB sur le dispositif d'affichage.

**7.** Procédé selon la revendication 5,
**caractérisé en ce**
**que** la différence entre les valeurs de couleur de consigne saisies et les valeurs de couleur réelles affichées est minimisée dans l'ordinateur et que les valeurs de mesure spectrales sont modifiées en conséquence par le calcul d'adaptation.

**8.** Procédé selon la revendication 5,
**caractérisé en ce**
**que** la modification des valeurs spectrales s'effectue de manière itérative jusqu'à ce qu'un critère d'interruption soit atteint.

**9.** Procédé selon l'une des revendications précédentes,
**caractérisé en ce**
**que** l'élément de test renferme également des champs de mesure de la couleur avec des couleurs spéciales.

| Tonwerte | |
|---|---|
| X | Y |
| 0,00 | 0,00 |
| 5,00 | 5,70 |
| 10,00 | 10,90 |
| 20,00 | 20,50 |
| 30,00 | 30,20 |
| 40,00 | 39,50 |
| 50,00 | 49,30 |
| 60,00 | 59,00 |
| 70,00 | 69,10 |
| 80,00 | 78,00 |
| 90,00 | 88,70 |
| 95,00 | 94,20 |
| 100,00 | 100,00 |

Fig.1

Tonwertkorrekturkurve

Fig.1a

| Tonwerte | |
|---|---|
| X | Y |
| 0,00 | 0,00 |
| 7,00 | 5,00 |
| 14,01 | 10,00 |
| 27,64 | 20,00 |
| 40,70 | 30,00 |
| 53,00 | 40,00 |
| 64,34 | 50,00 |
| 74,53 | 60,00 |
| 83,39 | 70,00 |
| 90,72 | 80,00 |
| 96,32 | 90,00 |
| 98,40 | 95,00 |
| 100,00 | 100,00 |

Fig.2

Tonwertkurve Druck/Daten

Fig.2a

Fig.3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102010007858 A1
- DE 102008045661 A1